# EUROPEAN PATENT SPECIFICATION

(11) **EP 4 546 702 B1**
(45) Date of publication and mention of the grant of the patent: **30.09.2026**
(21) Application number: 23306876.6
(22) Date of filing: 27.10.2023
(51) Int. Cl.: H04L 9/06

(54) **ARCHITECTURE CONFIGURED FOR PROVIDING A COMPRESSION FUNCTION FROM WITHIN A HASH FUNCTION**
ARCHITEKTUR ZUR BEREITSTELLUNG EINER KOMPRESSIONSFUNKTION AUS EINER HASH-FUNKTION
ARCHITECTURE CONFIGURÉE POUR FOURNIR UNE FONCTION DE COMPRESSION À PARTIR DE L'INTÉRIEUR D'UNE FONCTION DE HACHAGE

(43) Date of publication of application: 30.04.2025
(73) Proprietor: Secure-IC SAS, 35510 Cesson-Sévigné (FR)
(72) Inventor: GUILLEY, Sylvain, 75013 PARIS (FR); TAKARABT, Sofiane, 94110 ARCUEIL (FR)
(74) Representative: Atout PI Laplace

(56) References cited:
- US-A1- 2002 066 014
- AKBANI R ET AL: "HEAP: A packet authentication scheme for mobile ad hoc networks", AD HOC NETWORKS, ELSEVIER, AMSTERDAM, NL, vol. 6, no. 7, 1 September 2008 (2008-09-01), pages 1134 - 1150, XP022824436, ISSN: 1570-8705, [retrieved on 20071117], DOI: 10.1016/J.ADHOC.2007.11.002

## Description

The invention is directed to the field of cryptography and secure communications. It relates to an architecture configured for providing a compression function from within a hash function, and also to a method for providing a compression function from within a hash function.

Hash functions are used for data integrity verification, data storage, password storage, and various cryptographic applications. A hash function is a mathematical function that takes an input (or "message") and returns a fixed-size string of characters. The output ("hash value") is unique to the input data, and even a small change in the input produces a significantly different hash value.

The advent of the quantum computer has changed the odds in asymmetric cryptography. Indeed, a quantum computer can defeat today's classical cryptographic algorithms, namely RSA and elliptic curve based cryptography (ECC). This applies to all constructs of functions (which includes hash functions), namely key exchange, asymmetric encryption and digital signature.

Therefore, there is a strong push to develop quantum resistant algorithms that would substitute those algorithms. The generic term to designate quantum resistant algorithms is "Post Quantum Cryptography" (PQC).

However, one of the reasons for the inefficiency of HPQC is that hash primitive functions (e.g. SHA2, of [SHA2]) operate under a rigid mode of operation, made to hash very large amount of data, in a stereotyped manner.

Namely, the classical mode of operation consists in:
- initialize: prepare the hash function to accept forthcoming data to be hashed;
- update: submit consecutively blocks of data to be hashed; this operation can be halted in the middle and subsequently resumed - only knowledge of an intermediate state, referred to as "context" is required to pursue the computation;
- finalize: end the computation and deliver the result.

This way of operating the hash function comes with an overhead, namely a mandatory prelude (resp. postlude) function to prepare the hash function (initialize, resp. finalize), which does not provide conciseness in the hash computation. Paper [LMS_23] discloses a corresponding hardware implementation. However, this way of operating data turns out to be efficient only in the long run, when the message consists in multiple data blocks to hash, as the prelude/postlude are amortized.

Besides, in the context of safety, a device must be able to reboot while it is in mission. For example, a chip part of an automotive car driving on the road must have the ability to re-establish its functionalities in a very short amount of time in case of any hazard. The "1 ms" constraint is very hard to reach by a naïve implementation of HPQC [AFRICACRYPT20] (see last column of Table 4, where all numbers are > 1 million clock cycle, i.e., > 1 ms assuming already a favorable case of a 1 GHz clock frequency), because the evaluation of hash functions is long.

Document D1 (US 2002/0066014 A1) discloses a Message Digest Hardware Accelerator for implementing multiple cryptographic hash algorithms.

Therefore, there is a need for providing an architecture which overcomes the aforementioned problems.

An object of the present invention is an architecture and a method according to the appended claims.

Additional features and advantages of the present invention will become apparent from the subsequent description, taken in conjunction with the accompanying drawings:
Figure 1 illustrates a mode of chaining when processing a message which is longer than one block.
Figure 2 illustrates an architecture according to the invention.
Figure 3 illustrates an example of Boolean mixing function unit.
Figure 4 illustrates an example of implementation of the invented architecture.

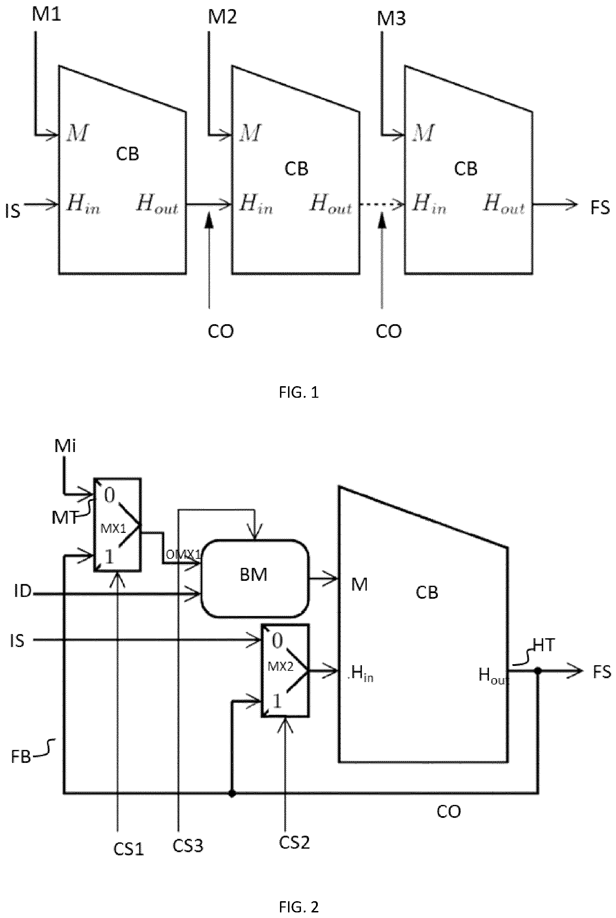

Figure 1 illustrates a mode of operation based on chaining, which is implemented when the messages are too long to be taken as an input of the hash function.

The compression function typically starts with an initial state IS, which is called the "chaining value." This initial state IS is set to a predefined constant. Each message block (M1, M2, ..., Mn) is processed by a compression block CB, and the compression function incorporates this block into the current state.

Once all message blocks have been processed, the final state FS represents the hash value. This state is formatted as a fixed-length sequence to produce the hash output.

A state, also referred to as context CO, is maintained. It allows to interrupt a computation in case data is starving (processing of the hash is therefore slowed down owing to the absence of data to hash).or another hash function shall be executed with higher priority (context CO is subsequently stored so that, after preemption, it can be restored).

Eventually, plaintext is padded. Padding values (which do not depend on manipulated data) can be injected via the input of the message blocks (M1, M2, ..., Mn). In particular, it allows inserting information about the message size, to avoid prefix attacks. Padding allows accommodating message of (almost) arbitrary size (namely: L < 264). However, padding incurs a performance loss for small messages. For instance, in SHA2, when the message size L is less than the block size (512), and of length L ≥ 512-64 = 448, then instead of hashing only one block, at least two blocks shall be hashed, which is definitely sub-optimal (a factor two in performance is lost).

Figure 2 illustrates the invented architecture configured for providing a compression function from within a hash function. The architecture comprises a message input MT which receives a message block Mi from a set of message blocks (M1, ..., Mn), a hash output HT which outputs a final state FS which represents the hash value of the set of message blocks (M1, ..., Mn). A compression block CB processes each block of data Mi from the set of message blocks (M1, ..., Mn) and gradually condenses them into a fixed-size hash value. The architecture temporary stores the compressed value between calls of the compression function. The call of hash functions is a feature that is intrinsic to the HPQC algorithms (which implement hash-trees); thus the invention is well-suited for HPQC algorithms.

A local memorization resource enables temporary storing hash results so as to avoid lengthy data transfers, back and forth from a memory. The addition of a data context, for temporary storing the compressed value between calls of the compression function, can be materialized by adding internal state registers. The size of the registers can be adapted for the used primitive such as SHA2, SHA3, Haraka, ASCON ([ASCON]), or Quark ([QUARK_10]).

A feedback path FB is connected to the compression function output HT, in order to mix the function output HT with the message input MT. Thus, the direct path from hash output to text input allows for legacy multi-block hashing (feedback from Hout to Hin), but also for iterated hashing. Besides, the insertion of a direct path from hash primitive output to hash primitive text input allows on-the-fly chaining of hashes. In this respect, keeping hash values local at the compression block CB provides a decisive advantage in terms of performance. Indeed, hash values are large (e.g., 256, 384 or 512 for the SHA2 hash function variants), hence copying these data back and forth takes a lot of time, which can be saved by implementing the shortcut of the feedback path FB directly connecting the output intermediate hash value Hₒᵤₜ to the message input MT of the compression block CB.

The architecture advantageously comprises a first multiplexor MX1 which takes as an input the feedback path FB and the message input MT. The first multiplexor MX1 selects the input of the chaining mode (feedback path FB or message input MT), based on a first control signal CS1. It is reminded that a multiplexor is an component which allows selecting one value out of several ones (two or more), based on a control signal. It can be implemented in hardware as a logic gate within the datapath in such a way to choose the adequate input within the same clock period, thereby not loosing clock cycles to make the decision. It allows saving the time to store and copy selected data, as it simply flows through the multiplexor.

The output OMX1 of the first multiplexor MX1 is connected to the input of a Boolean mixing function unit BM, which applies at least one Boolean function between the output OMX1 of the first multiplexor MX1 and internal data ID which are used in the compression function. The Boolean mixing function unit BM is connected to the input port of the compression block CB which is dedicated to the message block M = (m₀, m₁, ..., m₆₃). The output of the Boolean mixing function unit BM depends on a third control signal CS3.

A second multiplexor MX2 takes as an input the feedback path FB and an initial state IS of the compression function. Based on a second control signal CS2, it selects one of the input signals, as an input intermediate hash value (Hᵢₙ) of the compression block CB. The output intermediate hash value (Hₒᵤₜ) is provided at the function output HT.

Therefore, the first multiplexor MX1 and the second multiplexor MX2 allow different paths depending for instance on the supported HPQC algorithms (XMSS [IETF RFC 8391], LMS [IETF RFC 8554], etc.), and their sub-function (HPQC protocol key generation, signature generation or signature verification).

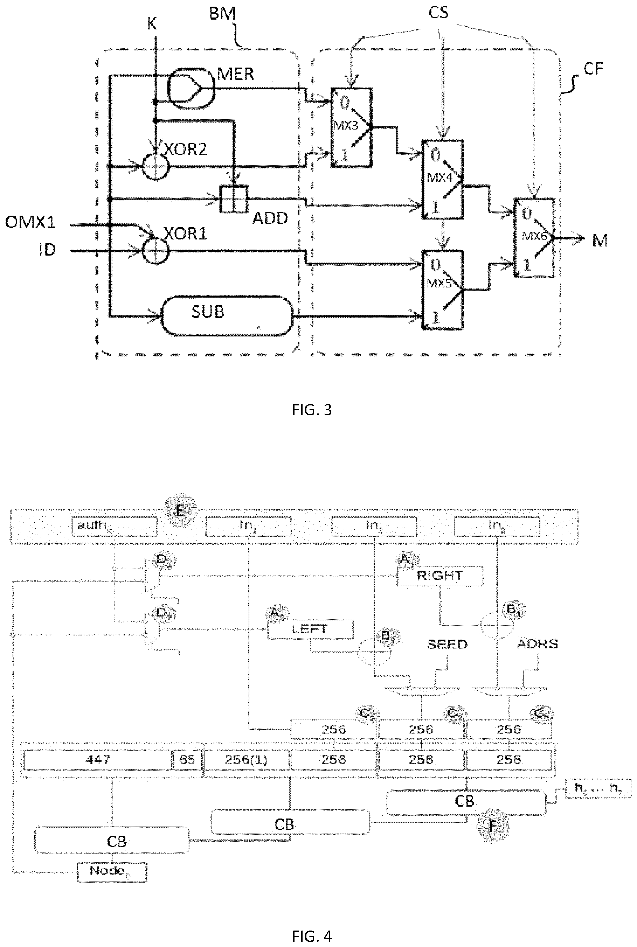

Figure 3 illustrates an example of implementation of the Boolean mixing function unit BM. The inputs are the output of the first multiplexor OMX1 and to the internal data ID.

The Boolean mixing function unit BM may comprise at least one XOR. A first XOR (XOR1) may take as an input the output of the first multiplexor OMX1 and the internal data ID. It corresponds to an exclusive OR between both data, i.e. it produces a true output (1) when the inputs are different and a false output (0) when the inputs are the same. A second XOR (XOR2) may take as an input the output of the first multiplexor OMX1 and a constant value K, so as to add that constant value to the output of the first multiplexor OMX1, e.g. by using a bitwise XOR.

The Boolean mixing function unit BM may also comprise an arithmetic addition. For that, an addition operator ADD takes as an input the output of the first multiplexor OMX1 and the constant value K. Thus, an integer addition in a modulo ring (i.e. a modular addition) is implemented.

The Boolean mixing function unit BM may also comprise at least one "merge" unit MER. The merge unit MER concatenates the output of the first multiplexor OMX1 and the constant value K (collation of two busses, also denoted "∥" in IETF RFC 8554).

Still in another embodiment, Boolean function unit BM comprises at least one "subrange" unit SUB, which selects of a part of the output of the first multiplexor OMX1. For example, a slice of bits of the feedback path FB may be extracted by the subrange unit SUB.

All the outputs of the Boolean mixing function unit BM may be connected to a multiplexing tree CF, which comprises:
- a third multiplexor MX3 which is connected to the merge unit MER and to the second XOR (XOR2);
- a fourth multiplexor MX4 which is connected to the output of the third multiplexor MX3 and to the output of the addition operator ADD;
- a fifth multiplexor MX5 which is connected to the output of the first XOR (XOR1) and to the output of the subrange unit SUB;
- a sixth multiplexor MX6 which is connected to the output of the fourth multiplexor MX4 and fifth multiplexor MX5.

Therefore, the multiplexing tree CF selectively activates one of the inputs of each multiplexor, based on external control signals CS which are timely delivered. The Boolean mixing function unit BM, which is coupled to the multiplexing tree CF, enables on-the-fly tweaking of the hash block, which avoids any disruption of the hash function and which also reduces the computing time. Besides, the size of the source code is reduced, since fewer operations are done by the processor.

Figure 4 illustrates an example of implementation of the invented architecture, in a dataflow style, which is particularly adapted for XMSS (Extended Merkle Signature Scheme, which is a type of hash-based cryptography). The four 256-bit inputs (In₁, In₂, In₃ and authₖ) allow for implementing the "Randomized Tree Hashing" (called RAND_HASH, in the XMSS specification, detailed in Alg. 7 of §4.1.4 of [IETF RFC 8391]). Input In₁ accommodates parameter KEY, input In₂ accommodates BM_0 and input In₃ accommodates BM_1. The authₖ input accommodates the data auth[k] defined for instance in §4.1.8 of the aforementioned XMSS standard. The output node₀ is an intermediate value on a node of the tree of hashes being computed. Figure 4 takes into account SHA-256 as the hash primitive. For the sake of pedagogy, multiple SHA compression blocks CB are displayed. In practice, it could be the same that is reused multiple times, as shown in figure 2. The initial state IS comprises standard initial values (h₀, ..., h₇) of SHA2 hash function.

The addition of a (data) context is materialized by internal state registers (C1, C2 and C3) of 256 bits. Context registers (A1, A2) of the HPQC algorithm are delegated to upper level. They contain either the right (RIGHT) and left (LEFT) halves of the former computation (value node₀), or the external authₖ value. This selection is determined by the control of XMSS algorithm, implemented as D1 and D2 multiplexors. The Boolean functions of the Boolean mixing function unit BM are embodied by Boolean operators (B1 and B2). Thus, the definition of extra modes of operations that are needed in addition to the basic ones (namely: initialize/update/finalize), including the Boolean mixing function unit in the feedback loop, is substantiated by tactics of context registers (A1, A2) and Boolean operators (B1 and B2).

The first multiplexor MX1 selects the input of the chaining mode, by means of multiplexors (D1 and D2) for input selection, which enable a flexibility strategy. The input register E is adapted to the HPQC algorithm. SHA compression blocks CB have state registers configured by multiplexors.

The feedback path FB of figure 2, which corresponds to the path from hash output to hash message input, is visible as inputs of the compression blocks CB.

The representation of figure 4 illustrates the detail of the exact feedback mode of data, and the exact size of the state registers. Namely, it is shown how many 256-bit registers are needed, and also how many other-size-registers (namely 65 and 447 bits) registers are needed. The register indicated as "256(1)" corresponds to the following constant value (in hexadecimal format) which implements padding:
0x00000000_00000000_00000000_00000000_00000000_00000000_000000 00_00000001
SEED and ADRS relate to the corresponding inputs that are standardized in XMSS.

The invention is particularly adapted for integration in a secure-boot device, for firmware integrity, firmware management, or authentication verification. Indeed, it enables a rapid execution of the secure-boot in less than 1 ms. The speed of firmware integrity/authenticity is a mandatory safety-critical applications, such as those complying to IEC 61508 or ISO 26262, which require a fast reboot process in case a hazard is detected. Indeed, the reboot is done in mission mode, and the system can withstand a service interruption of a maximum of one 1 millisecond (example of a car travelling at high speed). The invented architecture uses a local memorization resource, which saves time during the digital signature verification.

### Cited references:

[SHA2] Secure Hash Algorithm (SHA). FIPS PUB 180-2; NIST/ITL/CSD, Nov. 2001. http://csrc.nist.gov/publications/fips/fips180-2/fips180-2withchangenotice.pdf
[LMS_23] Yifeng Song, Xiao Hu, Jing Tian, Zhongfeng Wang: A High-Speed FPGA-Based Hardware Implementation for Leighton-Micali Signature. IEEE Trans. Circuits Syst. I Regul. Pap. 70(1): 241-252 (2023)
[AFRICACRYPT20] Fabio Campos, Tim Kohlstadt, Steffen Reith, Marc Stöttinger: LMS vs XMSS: Comparison of Stateful Hash-Based Signature Schemes on ARM Cortex-M4. AFRICACRYPT 2020: 258-277
[IETF RFC 8391] A. Huelsing et al., XMSS: eXtended Merkle Signature Scheme, https://datatracker.ietf.org/doc/html/rfc8391 ; dated May 2018
[IETF RFC 8554] D. McGrew et al., Leighton-Micali Hash-Based Signatures, https://datatracker.ietf.org/doc/html/rfc8554
[QUARK_10] Jean-Philippe Aumasson, Luca Henzen, Willi Meier, and Maria Naya-Plasencia. "Quark: a lightweight hash", CHES 2010, https://www.iacr.org/archive/ches2010/62250001/62250001.pdf
([ASCON] C. Dobraunig et al., ASCON v1.2, https://csrc.nist.gov/CSRC/media/Projects/lightweight-cryptography/documents/round-2/spec-doc-rnd2/ascon-spec-round2.pdf

## Claims

1. An architecture configured for providing a compression function from within a hash function in a HPQC algorithm, comprising:
- a message input (MT), configured for receiving a message block (Mi) from a set of message blocks (M1, ..., Mn);
- a hash output (HT), configured for outputting a final state (FS) which represents the hash value of the set of message blocks (M1, ..., Mn);
- a compression block (CB) for processing blocks of data (Mi) from the set of message blocks (M1, ..., Mn) and gradually condensing them into a fixed-size hash value;
wherein the architecture is further configured for temporary storing the compressed value between calls of the compression function.

2. The architecture according to claim 1, comprising a feedback path (FB) connected to the compression function output (HT), said feedback path (FB) being configured to be mixed with the message input (MT).

3. The architecture according to claim 2, comprising a first multiplexor (MX1) which is configured to take as an input the feedback path (FB) and the message input (MT), and a second multiplexor (MX2) which is configured to take as an input the feedback path (FB) and an initial state (IS) of the compression function, said first multiplexor (MX1) and said second multiplexor (MX2) being configured to enable a plurality of modes of operation of the compression function, based on control signals (CS1-CS3).

4. The architecture according to claim 3, comprising a Boolean mixing function unit (BM), which is configured to apply at least one Boolean function between the output (OMX1) of the first multiplexor (MX1) and internal data (ID) which are used in the compression function.

5. The architecture according to claim 4, wherein the Boolean function comprises at least one XOR.

6. The architecture according any of claim 4 or 5, wherein the Boolean function comprises at least one ADD operator, said ADD operator corresponding to an integer addition in a modulo ring.

7. The architecture according to any of claim 4 to 6, wherein the Boolean function comprises at least one "merge", wherein "merge" corresponds to a concatenation of two inputs of the Boolean mixing function unit (BM).

8. The architecture according to any of claim 4 to 7, wherein the Boolean function comprises at least one "subrange", wherein "subrange" corresponds to a selection of a part of the bits of one of said inputs.

9. The architecture according to any of the preceding claims, wherein the compression is that from a standard hash function SHA2, SHA3, Haraka, ASCON, or Quark.

10. Secure-boot device, comprising an architecture according to any of the preceding claims for firmware integrity or authentication verification.

11. Method for providing a compression function from within a hash function in a HPQC algorithm, comprising:
- receiving a message block (Mi) from a set of message blocks (M1, ..., Mn) at a message input (MT);
- outputting, from a hash output (HT), a final state (FS) which represents the hash value of the set of message blocks (M1, ..., Mn);
- processing blocks of data (Mi) from the set of message blocks (M1, ..., Mn) and gradually condensing them into a fixed-size hash value;
whereby the method further comprises temporary storing the compressed value between calls of the compression function.

12. The method according to claim 11, wherein a feedback path (FB) is mixed with the message input (MT).

13. The method according to claim 12, wherein a first multiplexor (MX1) takes as an input the feedback path (FB) and the message input (MT), and a second multiplexor (MX2) takes as an input the feedback path (FB) and an initial state (IS) of the compression function, said first multiplexor (MX1) and said second multiplexor (MX2) enabling a plurality of modes of operation of the compression function, based on control signals (CS1-CS3).

14. The method according to claim 13, wherein a Boolean mixing function unit (BM) applies at least one Boolean function between the output (OMX1) of the first multiplexor (MX1) and internal data (ID) which are used in the compression function.

15. A computer program product comprising computer-executable instructions to cause a computer system to carry out a method according to any of claims 11 to 14.

## Patentansprüche

1. Architektur, die so konfiguriert ist, dass sie eine Komprimierungsfunktion innerhalb einer Hash-Funktion in einem HPQC-Algorithmus bereitstellt und Folgendes umfasst:
- einen Nachrichteneingang (MT), der dazu konfiguriert ist, einen Nachrichtenblock (Mi) aus einer Menge von Nachrichtenblöcken (M1, ..., Mn) zu empfangen;
- einen Hash-Ausgang (HT), der dazu konfiguriert ist, einen Endzustand (FS) auszugeben, der den Hashwert der Menge von Nachrichtenblöcken (M1, ..., Mn) darstellt;
- einen Kompressionsblock (CB) zum Verarbeiten von Datenblöcken (Mi) aus der Menge von Nachrichtenblöcken (M1, ..., Mn) und schrittweises Zusammenführen dieser zu einem Hashwert fester Größe;
wobei die Architektur ferner konfiguriert ist, den komprimierten Wert zwischen Aufrufen der Komprimierungsfunktion temporär zu speichern.

2. Architektur nach Anspruch 1, umfassend einen Rückkopplungspfad (FB), der mit dem Kompressionsfunktionsausgang (HT) verbunden ist, wobei der Rückkopplungspfad (FB) dazu konfiguriert ist, mit dem Nachrichteneingang (MT) vermischt zu werden.

3. Architektur nach Anspruch 2, die einen ersten Multiplexer (MX1), der dazu konfiguriert ist, den Rückkopplungspfad (FB) und den Nachrichteneingang (MT) als einen Eingang heranzuziehen, und einen zweiten Multiplexer (MX2), der dazu konfiguriert ist, den Rückkopplungspfad (FB) und einen Anfangszustand (IS) der Kompressionsfunktion als einen Eingang heranzuziehen, umfasst, wobei der erste Multiplexer (MX1) und der zweite Multiplexer (MX2) dazu konfiguriert sind, eine Vielzahl von Betriebsmodi der Kompressionsfunktion auf der Grundlage von Steuersignalen (CS1-CS3) ermöglichen.

4. Architektur nach Anspruch 3, umfassend eine Boolesche Mischfunktionseinheit (BM), die dazu konfiguriert ist, mindestens eine Boolesche Funktion zwischen dem Ausgang (0MX1) des ersten Multiplexers (MX1) und internen Daten (ID) anzuwenden, die in der Kompressionsfunktion verwendet werden.

5. Architektur nach Anspruch 4, wobei die Boolesche Funktion mindestens ein XODER umfasst.

6. Architektur nach einem von Anspruch 4 oder 5, wobei die Boolesche Funktion mindestens einen ADD-Operator umfasst, wobei der ADD-Operator einer Ganzzahladdition in einem Modulo-Ring entspricht.

7. Architektur nach einem der Ansprüche 4 bis 6, wobei die Boolesche Funktion mindestens eine "Merge"-Funktion umfasst, wobei "Merge" einer Verkettung zweier Eingänge der Booleschen Mischfunktionseinheit (BM) entspricht.

8. Architektur nach einem der Ansprüche 4 bis 7, wobei die Boolesche Funktion mindestens einen "Teilbereich" umfasst, wobei "Teilbereich" einer Auswahl eines Teils der Bits eines der Eingänge entspricht.

9. Architektur nach einem der vorstehenden Ansprüche, wobei die Komprimierung durch eine Standard-Hashfunktion SHA2, SHA3, Haraka, ASCON oder Quark erfolgt.

10. Sichere Startvorrichtung, die eine Architektur nach einem der vorstehenden Ansprüche zur Überprüfung der Firmware-Integrität oder Authentifizierung umfasst.

11. Verfahren zum Bereitstellen einer Komprimierungsfunktion innerhalb einer Hash-Funktion in einem HPQC-Algorithmus, das Folgendes umfasst:
- Empfangen eines Nachrichtenblocks (Mi) aus einer Menge von Nachrichtenblöcken (M1, ..., Mn) an einem Nachrichteneingang (MT);
- Ausgeben, aus einem eines Hash-Ausgang (HT), eines Endzustands (FS), der den Hashwert der Menge von Nachrichtenblöcken (M1, ..., Mn) darstellt;
- Verarbeiten von Datenblöcken (Mi) aus der Menge von Nachrichtenblöcken (M1, ..., Mn) und schrittweises Zusammenfassen dieser zu einem Hashwert fester Größe;
wobei das Verfahren ferner temporäres Speichern des komprimierten Werts zwischen Aufrufen der Komprimierungsfunktion umfasst.

12. Verfahren nach Anspruch 11, wobei ein Rückkopplungspfad (FB) mit der Nachrichteneingabe (MT) vermischt wird.

13. Verfahren nach Anspruch 12, wobei ein erster Multiplexer (MX1) den Rückkopplungspfad (FB) und den Nachrichteneingang (MT) als einen Eingang heranzieht, und ein zweiter Multiplexer (MX2) den Rückkopplungspfad (FB) und einen Anfangszustand (IS) der Kompressionsfunktion als einen Eingang heranzieht, wobei der erste Multiplexer (MX1) und der zweite Multiplexer (MX2) eine Vielzahl von Betriebsmodi der Kompressionsfunktion auf der Grundlage von Steuersignalen (CS1-CS3) ermöglichen.

14. Verfahren nach Anspruch 13, wobei eine Boolesche Mischfunktionseinheit (BM) mindestens eine Boolesche Funktion zwischen dem Ausgang (0MX1) des ersten Multiplexers (MX1) und internen Daten (ID) anwendet, die in der Kompressionsfunktion verwendet werden.

15. Computerprogrammprodukt, das computerausführbare Anweisungen umfasst, um ein Computersystem zu veranlassen, ein Verfahren nach einem der Ansprüche 11 bis 14 durchzuführen.

## Revendications

1. Architecture configurée pour fournir une fonction de compression à partir d'une fonction de hachage dans un algorithme HPQC, comprenant :
- une entrée de message (MT), configurée pour recevoir un bloc de message (Mi) provenant d'un ensemble de blocs de messages (M1, ..., Mn) ;
- une sortie de hachage (HT), configurée pour émettre un état final (FS) qui représente la valeur de hachage de l'ensemble de blocs de messages (M1, ..., Mn) ;
- un bloc de compression (CB) pour traiter des blocs de données (Mi) de l'ensemble des blocs de messages (M1, ..., Mn) et les condenser graduellement en une valeur de hachage de taille fixe ;
dans laquelle l'architecture est en outre configurée pour stocker temporairement la valeur compressée entre les appels de la fonction de compression.

2. Architecture selon la revendication 1, comprenant un chemin de rétroaction (FB) connecté à la sortie de fonction de compression (HT), ledit chemin de rétroaction (FB) étant configuré pour être mélangé avec l'entrée de message (MT).

3. Architecture selon la revendication 2, comprenant un premier multiplexeur (MX1) qui est configuré pour prendre en entrée le chemin de retour (FB) et l'entrée de message (MT), et un second multiplexeur (MX2) qui est configuré pour prendre en entrée le chemin de retour (FB) et un état initial (IS) de la fonction de compression, ledit premier multiplexeur (MX1) et ledit second multiplexeur (MX2) étant configurés pour activer une pluralité de modes de fonctionnement de la fonction de compression, sur la base de signaux de commande (CS1-CS3).

4. Architecture selon la revendication 3, comprenant une unité de fonction de mélange booléen (BM), qui est configurée pour appliquer au moins une fonction booléenne entre la sortie (OMX1) du premier multiplexeur (MX1) et des données internes (ID) qui sont utilisées dans la fonction de compression.

5. Architecture selon la revendication 4, dans laquelle la fonction booléenne comprend au moins un XOR.

6. Architecture selon l'une quelconque des revendications 4 ou 5, dans laquelle la fonction booléenne comprend au moins un opérateur ADD, ledit opérateur ADD correspondant à une addition d'entier dans un anneau modulo.

7. Architecture selon l'une quelconque des revendications 4 à 6, dans laquelle la fonction booléenne comprend au moins une « fusion », dans laquelle « fusion » correspond à une concaténation de deux entrées de l'unité de fonction de mélange booléen (BM).

8. Architecture selon l'une quelconque des revendications 4 à 7, dans laquelle la fonction booléenne comprend au moins une « sous-plage », dans laquelle « sous-plage » correspond à une sélection d'une partie des bits d'une desdites entrées.

9. Architecture selon l'une quelconque des revendications précédentes, dans laquelle la compression est celle d'une fonction de hachage standard SHA2, SHA3, Haraka, ASCON ou Quark.

10. Dispositif de démarrage sécurisé, comprenant une architecture selon l'une quelconque des revendications précédentes pour l'intégrité de micrologiciel ou la vérification d'authentification.

11. Procédé de fourniture d'une fonction de compression à partir d'une fonction de hachage dans un algorithme HPQC, comprenant :
- la réception d'un bloc de message (Mi) provenant d'un ensemble de blocs de message (M1, ..., Mn) par une entrée de messages (MT) ;
- l'émission, à partir d'une sortie de hachage (HT), d'un état final (FS) qui représente la valeur de hachage de l'ensemble de blocs de messages (M1, ..., Mn) ;
- le traitement de blocs de données (Mi) de l'ensemble des blocs de messages (M1, ..., Mn) et les condenser graduellement en une valeur de hachage de taille fixe ;
dans lequel le procédé comprend en outre le stockage temporaire de la valeur compressée entre les appels de la fonction de compression.

12. Procédé selon la revendication 11, dans lequel un chemin de rétroaction (FB) est mélangé avec l'entrée de message (MT).

13. Procédé selon la revendication 12, dans lequel un premier multiplexeur (MX1) prend en entrée le chemin de retour (FB) et l'entrée de message (MT), et un second multiplexeur (MX2) prend en entrée le chemin de retour (FB) et un état initial (IS) de la fonction de compression, ledit premier multiplexeur (MX1) et ledit second multiplexeur (MX2) activant une pluralité de modes de fonctionnement de la fonction de compression, sur la base de signaux de commande (CS1-CS3).

14. Procédé selon la revendication 13, dans lequel une unité de fonction de mélange booléen (BM) applique au moins une fonction booléenne entre la sortie (OMX1) du premier multiplexeur (MX1) et des données internes (ID) qui sont utilisées dans la fonction de compression.

15. Produit de programme informatique comprenant des instructions exécutables par ordinateur pour amener un système informatique à mettre en œuvre le procédé selon l'une quelconque des revendications 11 à 14.
